(19) Europäisches Patentamt
European Patent Office
Office européen des brevets

(11) **EP 4 241 877 A1**

(12) **EUROPEAN PATENT APPLICATION**
published in accordance with Art. 153(4) EPC

(43) Date of publication:
**13.09.2023 Bulletin 2023/37**

(21) Application number: **21887930.2**

(22) Date of filing: **08.11.2021**

(51) International Patent Classification (IPC):
**B01J 19/28** (2006.01)   **B01J 19/00** (2006.01)
**F27B 7/16** (2006.01)

(52) Cooperative Patent Classification (CPC):
**B01J 19/00; B01J 19/28; F27B 7/16;** Y02E 30/30

(86) International application number:
**PCT/BR2021/050486**

(87) International publication number:
**WO 2022/094684 (12.05.2022 Gazette 2022/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.11.2020   BR 102020022740**

(71) Applicant: **Tecnored Desenvolvimento
Tecnologico S.A.
CEP-12401-010 Pindamonhangaba São Paulo
(BR)**

(72) Inventors:
• **BRASIL, Ludmila, Lopes, Nascimento
22290-240 Rio de Janeiro, RJ (BR)**

• **DE OLIVEIRA, Ronald, Lopes
12405-278 Pindamonhangaba, SP (BR)**
• **GONÇALVES, Guilherme Francisco
12412-520 Pindamonhangaba, SP (BR)**
• **SOARES, Álvaro, Guedes
13800-384 Mogi Mirim, SP (BR)**
• **FRÓIS, Fabrício, Tinôco
12444-210 Pindamonhangaba, SP (BR)**
• **DA SILVA, Ezequiel
12609-270 Lorena, SP (BR)**
• **POTTER, Stephen Michael
22250-145 Rio de Janeiro, RJ (BR)**

(74) Representative: **Zacco Denmark A/S
Arne Jacobsens Allé 15
2300 Copenhagen S (DK)**

(54) **SYSTEM OF INTERNALLY BACKMIXING THE REACTIVE MASS IN A ROTATING CYLINDER REACTOR**

(57)   The present invention relates to a system for backmix the reagent mass in rotating cylindrical reactors. In this context, the present invention provides a system for internal backmix of the reagent mass in a rotating cylindrical reactor (2), comprising a first set of drag fins (27) adapted for dragging the reagent mass in a first direction, and a second set of drag fins (28) adapted for dragging the reagent mass in a second direction opposite to the first direction, wherein the first (27) and the second (28) set of drag fins are positioned internally along the length of the cylindrical rotating reactor (2). The system described above allows the mixing of a portion of the reagent mass at a more advanced stage of the reactor with another portion at an earlier stage of processing, homogenizing the reagent mass temperatures and increasing the reactor's productivity.

PIC. 1

**Description**

FIELD OF INVENTION

The present invention relates to systems for backmix the reagent mass. In particular, the present invention relates to a system for backmix the reagent mass in rotating cylindrical reactors.

BACKGROUND OF THE INVENTION

Among the most common applications of rotary cylindrical reactors are the drying of organic matter and food, the roasting of biomass and food, the pyrolysis of biomass, and the heat treatment of mineral coals. In general, these processes seek to develop characteristics of the rotary cylindrical reactors that give the highest possible productivity associated with solid product quality.

The pyrolysis process of biomass involves the preliminary endothermic reactions of drying (up to typically 180°C) and then roasting (up to typically 340°C). This is followed by very intense, exothermic chemical reactions around 350°C, characterized by significant mass loss of the reagent system and a profound transformation in the chemical structure of the solid product, the biochar.

In pyrolysis, the organic matter in biomass is thermochemically decomposed by heating in the absence of oxygen, generating products with high carbon content. The characteristics of the products, their relative proportions in the gaseous, liquid, and solid phases, and the energy required for the process depend on several factors such as the natures of the precursor biomass and the reagent atmosphere, the pressure, the draw rate of the reagent gases, the temperature, the heating rate, and the particle size.

The pressure and the draught rate of the reagent gases have an influence on the process of recombination of the reagent gases with the solid matrix product, the biochar, a process called chemical vapor deposition.

Temperature, heating rate and particle size have an influence on the overall rate of heat transfer from the external medium to the interior of the biomass particle and hence on the productivity of the process.

Considering the thermodynamic evolution of the biomass pyrolysis process with an endothermic initial phase followed by an exothermic final phase and also the goal of achieving high throughput rotary reactors, a major goal sought by designers of rotary cylindrical reactors is a way to mix a portion of the final stage reagent mass with the reagent mass introduced into the reactor at the initial processing stage.

In a rotating cylindrical reactor, one way to perform such mixing would be through a screw conveyor external to the reactor. The solid product at the discharge of the rotating cylindrical reactor would be split and a portion would be returned via a closed screw conveyor and reinjected into the feed of the rotating cylindrical reactor. However, this is a complex system, because the reaction mass has a temperature of around 400°C or higher, and there can be no contact of this product with atmospheric air.

The present invention aims at solving the above problems in a practical and efficient way.

SUMMARY OF THE INVENTION

The present invention has as a first objective to provide a system of internal backmix of the reagent mass in a rotating cylindrical reactor that allows the mixing of a portion of the reagent mass in a more advanced stage of the reactor with another in a previous stage of processing, homogenizing the temperatures of the reagent mass and increasing the productivity of the reactor.

The present invention has as a second objective to provide a system of internal backmix of the reagent mass in a rotating cylindrical reactor that dispenses with the need for an external system for moving the said mass, considerably simplifying the design of the reactor.

In order to achieve the above described objectives, the present invention provides a system of internal backmix of the reagent mass in a rotating cylindrical reactor, the system comprising (i) a first set of drag fins adapted for dragging the reagent mass in a first direction and (ii) a second set of drag fins adapted for dragging the reagent mass in a second direction opposite to the first direction, wherein the first and the second set of drag fins are positioned internally along the length of the cylindrical rotating reactor.

BRIEF DESCRIPTION OF THE IMAGES

The detailed description presented below makes reference to the attached pictures and their respective reference numbers.

**Picture 1** illustrates a cross-sectional side view of the cylindrical reactor comprising the backmix system according to the preferred embodiment of the present invention.

**Picture 2** illustrates a plan view of the internal side of the rotating cylindrical reactor.

DETAILED DESCRIPTION OF THE INVENTION

Preliminarily, it is emphasized that the description that follows will start from preferred embodiments of the invention. As will be evident to anyone skilled in the subject, however, the invention is not limited to these particular embodiments.

The present invention solves the technical problem described above by providing a system for internal backmix of the reagent mass in a rotating cylindrical reactor **2**. For the purposes of this description, a rotating cylindrical reactor **2** is defined as a cylindrical rotating body with openings at its ends.

The system of the present invention, according to a preferred embodiment illustrated in **Pictures 1** and **2,** comprises a first set of drag fins **27** adapted for dragging the reagent mass in a first direction, and a second set of drag fins **28** adapted for dragging the reagent mass in a second direction opposite to the first direction, wherein the first **27** and the second **28** set of drag fins are internally positioned along the length of the rotating cylindrical reactor **2.**

As shown in the cross-sectional side view of **picture 1,** the drag fins of the first **27** and second **28** sets of drag fin are preferably sheet metal whose height typically corresponds to approximately one-tenth of the diameter of the rotating cylindrical reactor **2.**

Preferably, the drag fins of the first **27** and second **28** sets of drag fins are attached to the inner side of the rotating cylindrical reactor **2** by welding. However, the fins may be attached to the inner side of the rotating cylindrical reactor **2** by means of any attachment methods known in the state of the art.

**Picture 2** represents a plan view of the internal surface of the side of the rotating cylindrical reactor **2.** In the cylindrical form, point **A** coincides with point **A'** and point **B** coincides with **B'.** In this example, which in fact consists of a manufacturing plan, the internal side plate of the rotating cylindrical reactor **2** was divided into 36 sections along its length and 8 sections along its width. It is worth pointing out that this sectioning is only exemplary and illustrative, so that other configurations can be performed by a technician versed in the art.

In the present example, the length and diameter of the rotating cylindrical reactor **2** are respectively **L and D**; the number of imaginary lines along the length and width of the planar side are respectively **n** and **m**; and the fins are mounted plates inclined with respect to the longitudinal lines **a, b, c, d, e, f, g, h.** The inclination of the propeller fins describes an angle $\alpha$ with respect to these longitudinal lines such that $tg\,\alpha = \dfrac{y}{x}$, where x and y are the dimensions of each of the sectors, as illustrated in **picture 2.** Considering that $x = \dfrac{L}{n}$ and $y = \dfrac{\pi \cdot D}{m}$, the inclination of the fins can be written as:

$$tg\,\alpha = \frac{\frac{\pi \cdot D}{m}}{\frac{L}{n}} = \frac{\pi \cdot D \cdot n}{L \cdot m}.$$

The plan view in **picture 2** also shows the different sets of drag fins **27**, **28** arranged along the longitudinal lines **a, b, c, d, e, f, g, h,** the said sets of drag fins **27**, **28** being adjacent to each other and parallel to the longitudinal axis of the cylindrical rotary reactor **2.** The first set of drag fins **27** is adapted for dragging the reagent mass from the feed inlet to the outlet (from left to right). The second set of drag fins **28**, in turn, is adapted for dragging the reagent mass from the outlet to the feed inlet (from right to left). Obviously, since the ultimate goal is that all of the reagent mass entering the feed inlet comes out treated at the outlet, the total area of the fins of the first set of fins **27** in contact with the reagent mass is greater than the total area of the second set of fins **28.** This can be realized, by way of example, in the form of a larger number of fins in the first set of drag fins **27** compared to the second set of drag fins **28.** Alternatively, there is the possibility that the number of fins of the two sets is the same, but the fins of the first set of drag fins **27** have a greater length and/or width than those of the second set of drag fins **28.**

In the realization where there are a greater number of fins in the first set first set of drag fins **27,** the number of fins carrying the reagent mass forward (from the feed inlet to the outlet) is always greater than the number of fins carrying the reagent mass backward. For example, for every eight (8) fins in rotary cylindrical reactor **2,** six (6) may belong to the first set of drag fins **27** and two (2) to the second set of drag fins **28.** In this case, effectively, there are 6 (six) fins doing the work of carrying the material forward while the other 2 (two) perform the service of backmix the reagent mass, causing a portion of the reagent mass in a more advanced stage of reaction (hotter) to mix with a portion of the reagent mass in a previous stage of reaction (colder).

The distribution of fins in the $\dfrac{L}{x}$ vertical bands is repeated along the entire inner length of the rotating cylindrical reactor **2,** generating a forward drag string of reagent mass, with regular sectors of fins bringing the hottest mass to the rear. This arrangement consists of a way to promote the thermal exchange of the reagent mass, conferring an increase in productivity to the rotating cylindrical reactor **2.**

Therefore, as exposed above, the present invention provides a system of internal backmix of the reagent mass in a rotating cylindrical reactor that allows the mixing of a portion of the reagent mass in a more advanced stage of the reactor with another in a previous stage of processing, homogenizing the temperatures of the reagent mass and increasing the productivity of the reactor. Thus, the present system dispenses with the need for an external system for moving the said mass, considerably simplifying the reactor's design.

Numerous variations affecting the scope of protection of the present request are permissible. Thus, it is reinforced that the present invention is not limited to the particular configurations/concretizations described above.

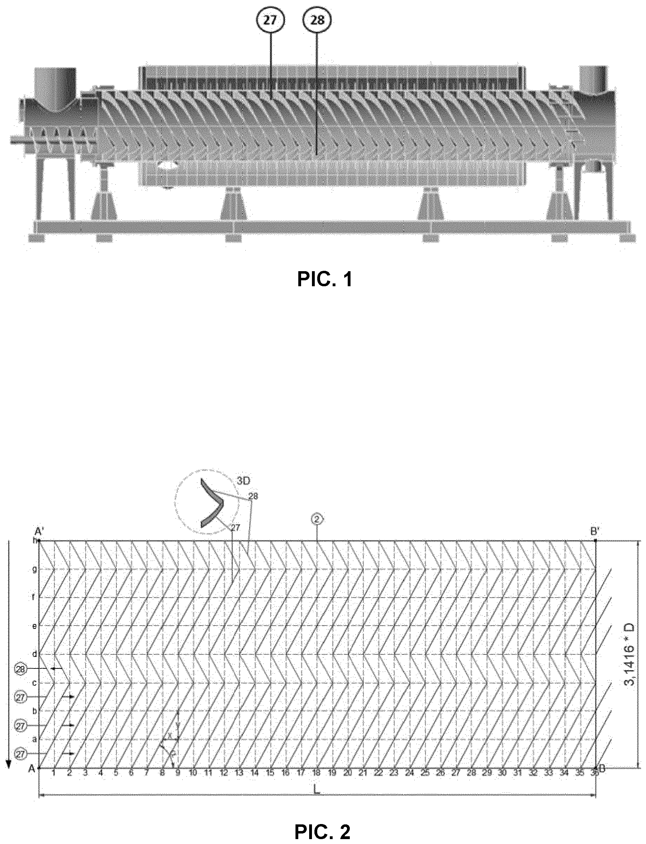

**Claims**

1. Internal backmix system of the reagent mass in a rotating cylindrical reactor (2), **characterized by** comprising:

   a first set of drag fins (27) adapted for dragging the reagent mass in a first direction; and
   a second set of drag fins (28) adapted for dragging the reagent mass in a second direction opposite to the first direction,
   wherein the first (27) and the second (28) set of drag fins are positioned internally along the length of the rotating cylindrical reactor (2).

2. System, according to claim 1, **characterized in that** the first set of drag fins (27) is adapted for dragging the reagent mass from the feed inlet of the rotating cylindrical reactor (2) to the outlet.

3. System, according to claim 1 or 2, **characterized in that** the second set of drag fins (28) is adapted for dragging the reagent mass from the outlet of the rotating cylindrical reactor (2) to the feed inlet.

4. System, according to any one of claims 1 to 3, **characterized in that** the first set of drag fins (27) is adjacent to the second set of drag fins (28), both being parallel to the longitudinal axis of the rotating cylindrical reactor (2).

5. System, according to any one of claims 1 to 4, **characterized in that** the drag fins of the first (27) and second (28) sets of drag fins are attached to the inner side of the rotating cylindrical reactor (2) by welding.

6. System, according to any one of claims 1 to 5, **characterized in that** the total area of the fins of the first set of drag fins (27) in contact with the reagent mass is greater than the total area of the second set of drag fins (28).

7. System, according to claim 6, **characterized in that** it comprises a greater number of fins in the first set of drag fins (27) compared to the second set of drag fins (28).

8. System, according to claim 6, **characterized in that** the fins of the first set of drag fins (27) have a greater length and/or width than those of the second set of drag fins (28).

**PIC. 1**

**PIC. 2**

## INTERNATIONAL SEARCH REPORT

| International application No. |
|---|
| **PCT/BR2021/050486** |

A. CLASSIFICATION OF SUBJECT MATTER
  IPC: B01J 19/28 (2006.01), B01J 19/00 (2006.01), F27B 7/16 (2006.01), B01F 9/06 (2006.01)
  CPC: B01J 19/28, B01J 19/006, F27B 7/161, B01F 29/63, B01J 2219/0077
According to International Patent Classification (IPC) or to both national classification and IPC

B. FIELDS SEARCHED

Minimum documentation searched (classification system followed by classification symbols)

  **B01J19, F27B7**

Documentation searched other than minimum documentation to the extent that such documents are included in the fields searched
  **Base de dados do INPI - BR (SINPI), PORTAL CAPES**

Electronic data base consulted during the international search (name of data base and, where practicable, search terms used)

  **CAPLUS, PCTFULL, EPFULL, USPATFULL, KRFULL, JPFULL, CNFULL, ESPACENET, DERWENT**

C. DOCUMENTS CONSIDERED TO BE RELEVANT

| Category* | Citation of document, with indication, where appropriate, of the relevant passages | Relevant to claim No. |
|---|---|---|
| X | CN 102514114 A (HIMILE MECHANICAL SCI TECH) 27 June 2012 (2012-06-27) The whole document | 1-8 |
| X | WO 2004103540 AI ( KAESS ANDRE [DE]) 02 December 2004 (2004-12-02) The whole document | 1-8 |
| X | US 3751218 A (ARTISAN IND) 07 August 1973 (1973-08-07) The whole document | 1-8 |
| A | CN 110079343 A (KUOYANG HUBEI ENVIRONMENTAL PROTECTION AND ENERGY SAVING TECH CO LTD) 02 August 2019 (2019-08-02) The whole document | 1-8 |

| ☒ Further documents are listed in the continuation of Box C. | ☒ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03/01/2022** | **13/01/2022** |

| Name and mailing address of the ISA/ **BR** | Authorized officer |
|---|---|
| | |
| Facsimile No. | Telephone No. |

Form PCT/ISA/210 (second sheet) (January 2015)

**INTERNATIONAL SEARCH REPORT**

International application No.

**PCT/BR2021/050486**

C (Continuation).    DOCUMENTS CONSIDERED TO BE RELEVANT

| Category* | Citation of document, with indication, where appropriate, of the relevant passages | Relevant to claim No. |
|---|---|---|
| A | CN 111410399 A ( JIANGYU) 14 July 2020 (2020-07-14) The whole document | 1-8 |
| A | BR 102014010862 A2 ( SPPT PESQUISAS TECNOLÓGICAS LTDA) 3 October 2017 (2017-10-03) | 1-8 |

Form PCT/ISA/210 (continuation of second sheet) (January 2015)

INTERNATIONAL SEARCH REPORT
Information on patent family members

| International application No. |
|---|
| **PCT/BR2021/050486** |

| | | | |
|---|---|---|---|
| CN 102514114 A | 2012-06-27 | CN 102514114 B | 2014-11-19 |
| WO 2004103540 A1 | 2004-12-02 | AR 044393 A1 | 2005-09-14 |
| US 3751218 A | 1973-08-07 | CA 985467 A | 1976-03-16 |
| | | CH 543360 A | 1973-10-31 |
| | | DE 2240139 A1 | 1973-03-08 |
| | | DE 2240139 B2 | 1981-07-02 |
| | | DE 2240139 C3 | 1982-03-11 |
| | | FR 2150921 A1 | 1973-04-13 |
| | | FR 2150921 B3 | 1975-10-03 |
| | | GB 1374496 A | 1974-11-20 |
| | | JP S4832168 A | 1973-04-27 |
| | | JP S5518611 B2 | 1980-05-20 |
| | | NL 7211622 A | 1973-03-01 |
| CN 110079343 A | 2019-08-02 | NONE | |
| CN 111410399 A | 2020-07-14 | NONE | |
| BR 102014010862 A2 | 2017-10-03 | NONE | |

Form PCT/ISA/210 (patent family annex) (January 2015)